# EUROPEAN PATENT SPECIFICATION

(11) **EP 1 487 205 B1**
(45) Date of publication and mention of the grant of the patent: **19.12.2007**
(21) Application number: 04253543.5
(22) Date of filing: 14.06.2004
(51) Int. Cl.: H04N 5/76

(54) **Display system for views of video item**
Anzeigesystem für mehrere Ansichten eines Videobildes
Système de visualisation de multiples vues d'une scène vidéo

(30) Priority: 14.06.2003 GB 0313866
(43) Date of publication of application: 15.12.2004
(73) Proprietor: Impressive Ideas Ltd., London W6 0HX (GB)
(72) Inventor: Taylor, Christopher, London, W6 0HX (GB); Anthony, David, New York, NY 10013 (US)
(74) Representative: Wood, Graham

(56) References cited:
- EP-A- 0 845 903
- EP-A- 0 872 839
- WO-A-01/50218
- WO-A-01/65854
- US-A- 6 128 432

## Description

The invention to which this application relates is to the provision of recorded data, said data comprising video, audio and/or auxiliary data in a digital format and relating to a particular video item such as an event. The data is provided on a recording media, such as for example a DVD, with the data providing a series of versions of the video item, from which a particular version for display of the video item can be selected by a user.

The provision of DVD's is now well known and is increasingly superseding video tape and other forms as the most commonly used format for video and audio data. The DVD is a recording media disc onto which digital data can be transferred and held and, when inserted into a DVD player, the user can control, typically via a remote control device and infrared signals therefrom, the display of video and/or audio generated from the stored data on the DVD.

The DVD itself, in order to comply with the internationally recognised standards, allows up to 9 video data tracks, 8 audio data tracks and up to 32 auxiliary data tracks to be stored thereon. The auxiliary data tracks are most typically used for subtitle information for different language versions of the audio. The range of audio tracks available can typically be used, for example, for carrying audio data for the main or normal audio for the video item, for a director's commentary on the video item, for the provision of particular version of the audio such as a no-swearing option, and so on as required.

The video data tracks which are available can be used in a number of ways such as a first track carries the data for the standard video version of the video item of the DVD, other video tracks may be produced to carry outtakes which are not included in the standard version, and/or interviews with persons appearing in the video item, to give two examples.

In the filming of video items such as, for example, concerts, sports events and the like, it is known to use a number of video cameras, with the cameras provided to each record the video item from a particular location which differs from the others in terms of height and/or angle with respect to the item being filmed. The purpose of this number of cameras is to try and provide the best possible views of the item at each instant. Conventionally the particular view of the video item which is shown and available to the viewer at any one time when the viewer is looking at the video item generated from data on a recording media such as a DVD, has been previously decided upon by the producer or director of the filming of the video item. This is done by the producer or director looking at all of the video feeds from the available cameras and selecting one feed and hence view for each instant and then joining together the selected views in sequence to form the video display of the video item which is stored on the DVD. Thus, while the producer or director has available all of the camera feeds at the time of the event taking place, when viewing the subsequent recording of the video item, the viewer via the DVD or other media recording device, only has available the combined views sequence defined by the producer or director.

The aim of the present invention is to provide to the viewer of a recorded video item, the ability, via the recording medium, to select to view the said video item from one of a range of viewer selectable locations thereby allowing different angles and/or heights. A further aim is to allow the selection to be changed during viewing and the selection to be made via the apparatus used to decode the data from the recording media, said apparatus in the form of, for example, a DVD player.

WO01/50218 shows a system in which there arc provided various display options for available video and/or audio blocks of data in sequence but does not show the generation of a seamless display of data for each of the views available for selection of a video item at any given time.

EP0872839 shows the provision of a navigation pack which allows the correct selection of data cells which are to be selected in sequence to a particular user selection.

EP0845903 shows the provision of data for a series of views of an item and the possibility of user selection of the same but not vie a seamless display which is generated on screen.

In a first aspect of the invention, there is provided a system for recording, storing and playing, digital data, said system including means for generating the video data, a recording media, a device for decoding the recording media to retrieve data stored on the recording media and generating a video display on a screen connected thereto, said recording media including stored therein video digital data for a defined video item, and when a viewer selects to use said recording media at least two viewpoints of said item are available to be selected by the viewer to be shown on the main video display screen, said viewpoints defined by a plurality of video data tracks on the recording media said plurality of video data tracks including data for the same video item, each of said tracks comprising a view of the video item from a location at a different angle and/or height with respect to the video item and the video data tracks include data representing views from locations spaced in a pattern to provide viewpoints of the video items from differing angles and a seamless selection display is generated on the screen including each of the video track views which are available for selection to view, the said views are placed adjacent each other to form the selection display to provide an integrated panoramic view of the several video track views to provide a virtual view point which can be selected by the viewer via a cursor selectively movable along the display, said selection display including the video track view being shown on the main video display screen at that time and characterised in that the video data for the generation of the selection display is mapped onto each of the video data tracks so that when a particular video track view is selected for display on the main video display screen the related video data track for that view includes the data to allow the selection display (30) to be displayed.

Typically the viewer is provided with a selection means to allow the selection to view video data from one of said video tracks.

In one embodiment, the video item is an event in the form of any of a television programme, film, sports events, concert or the like which is recorded and the data stored on the recording media.

In one embodiment the recording media is a DVD.

Typically, when the video item is initially selected for viewing, a default video track on the recording media starts to be decoded by the apparatus and a video display generated on screen. The default video track can be for a particular angle or viewing height of the event, such as, for example, the front view. If the invention is activated at that time, a selection display is also generated on the screen, typically to the side, top or bottom of the screen, said selection display indicating each of the views of the video item which are available and the viewer can navigate along each of the said video track displays using the selection means. If they wish to select one of the other available views from that which is currently being generated, a selection signal is generated by moving the cursor or highlighted portion on the selection display to the appropriate view display and a selection signal is generated. Upon receipt of the selection signal the decoding apparatus identifies the appropriate video data track on the recording media for that view and then proceeds to decode the data from that video data track, allowing the subsequent generation on the screen of the selected view of the video item.

Typically, the video data tracks include data representing views spaced 360" around the video item such that for example, if there are 8 video tracks available, when the video item is taking place, eight cameras are angularly spaced and located with respect to the item being filmed and directed to said video item. Each of the video data feeds from the cameras is then recorded on a respective video data track on the recording media. As a result, in this example, the selection display on screen will include eight display segments, each representing one of the eight video data tracks.

For the purpose of selecting which view to watch, the same is in fact split into side by side segments positioned side by side, in a line, if the views are all from the same height or are of the same angle but of differing heights.

It is envisaged that the invention is of particular utility with regard to video items in the form of live events which are filmed and subsequently recorded onto the recording media for purchase and display at a later date, such live events including sports events and concerts.

In one example, for a concert, the eight video cameras can be positioned 45" apart around the concert performer therefore providing views from the front towards the back, from the back towards the front and from each side, each of said views being recorded onto a particular video track and then available for selection by the viewer subsequently. With regard to sports events, the video cameras may include a number which are angularly spaced around a sports field but also a number which may be at different heights.

Typically, if the video data tracks which are available represent a combination of views from differing heights and angular spacing then the selection display on screen may take the form of a cross. In each case, the selection display can be navigated via a selection means, which most typically will be in the form of a remote control device which can be held by the viewer and, the recording media apparatus, upon receipt of infrared or other signals from the remote control device, provides a highlighted portion or cursor which moves with respect to the selection display. When a particular display segment is reached and selected, the recording media apparatus receives a signal and accesses the particular video track on the recording media and starts to process the data thereon to generate the main screen display.

In a further aspect of the invention there is provided a method for generating a series of views of a video item, said method comprising the steps of capturing and generating video data for at least two different views of the video item, allocating the video data for each view onto a video data track of a recording media, said recording media, when inserted into decoding apparatus, allowing the generation of video from user selected available video tracks on the main display screen and the user is provided with selection means to select to view the video item by selecting one of the views to allow the generation of video from the video data track matching the selected view on a screen connected to the decoding apparatus and the views are from locations spaced to provide views of 360° with respect to the video item and the selection is made via a seamless selection display generated on the display screen indicating each of the video track views which are available for selection to view, the video track views are placed adjacent each other to form the display as an integrated panoramic view comprising each of the several video track views including that view which is being shown on the main display screen to allow the viewer to select a virtual viewpoint which can be selected by the viewer via a cursor or highlighted portion selectively moveable by the viewer along said display and characterised in that the video data for the generation of the selection display is mapped onto each of the video data tracks so that when a particular video track view is selected for display on the main video display screen the related video data track for that view includes the data to allow the selection display to be displayed in conjunction with the selected video track view.

In one embodiment, each of the segments includes a moving display generated from the video data track for that particular view.

In one embodiment a processing system is provided to process data in response to a user selection of any one of a number of video data tracks on a recording medium, said user using control means to generate an indicator to be moved on screen with respect to said selection display to allow one of said video data streams to be selected by the user and generated on the screen.

While this selection display is described herein with respect to the use in conjunction with a DVD it should be appreciated and the patent interpreted such that selection display can be used with other vide o processing means such as a CD/DVD ROM application as well as for other dedicated video playback devices as the selection display herein described is a very effective way of navigating through a range of video images of the same event such as 360 degree video.

In one embodiment the selection display is generated using picture in picture (PIP) technology.

Specific embodiments of the invention are now described with respect to the accompanying drawings wherein;
Figures 1A-B illustrate plan, schematic views of two embodiments of the filming of an event in accordance with the invention;
Figure 2 illustrates, in schematic form, the apparatus utilised for the invention in one embodiment;
Figures 3 and 4 illustrate views of the display screen in accordance with the invention;
Figures 5-7 illustrate one method by which the images received from the cameras can be processed to form the screen display and selectable images in accordance with the invention.

Referring firstly to Figure 1A there is illustrated the manner in which a video item in the form of an event, in this case a musical concert, would be filmed in accordance with one embodiment of the invention with the figure in plan to illustrate the layout of the video cameras used. The performer 2 is performing on a stage 4 with an audience 6 positioned at the front of the stage. To film the event eight video cameras are provided 8-15, each spaced equally apart in this embodiment as shown in Figure 1A.

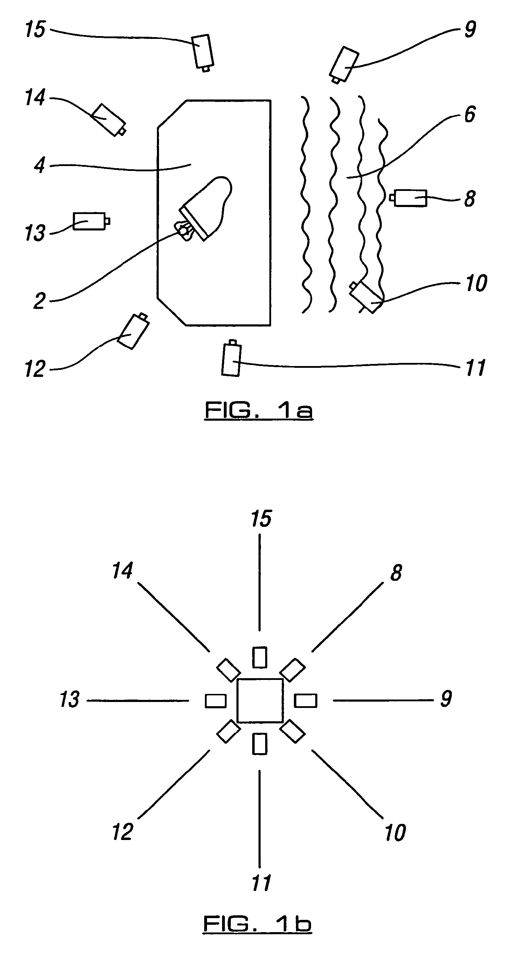

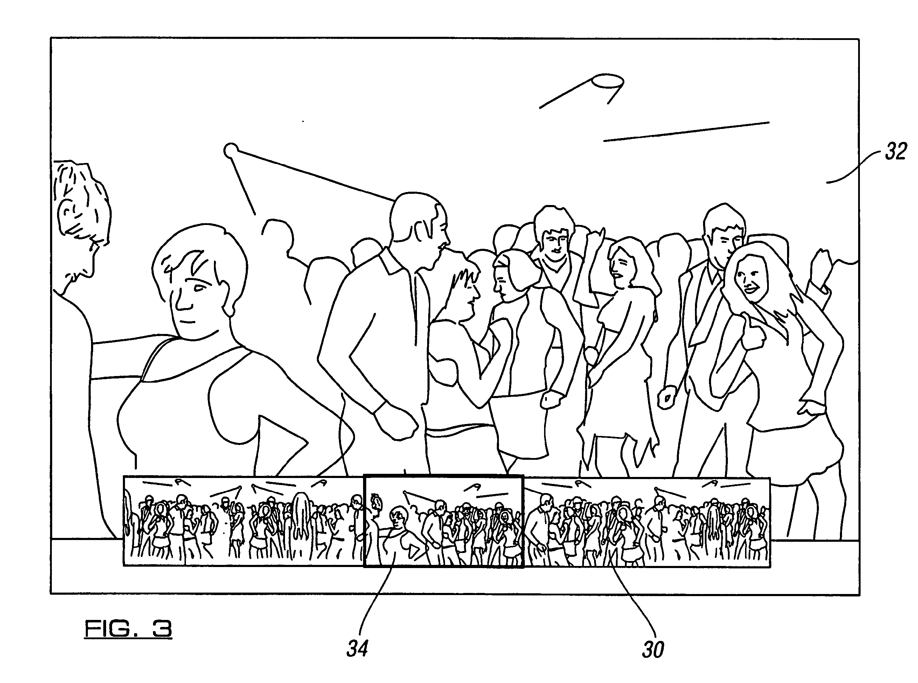

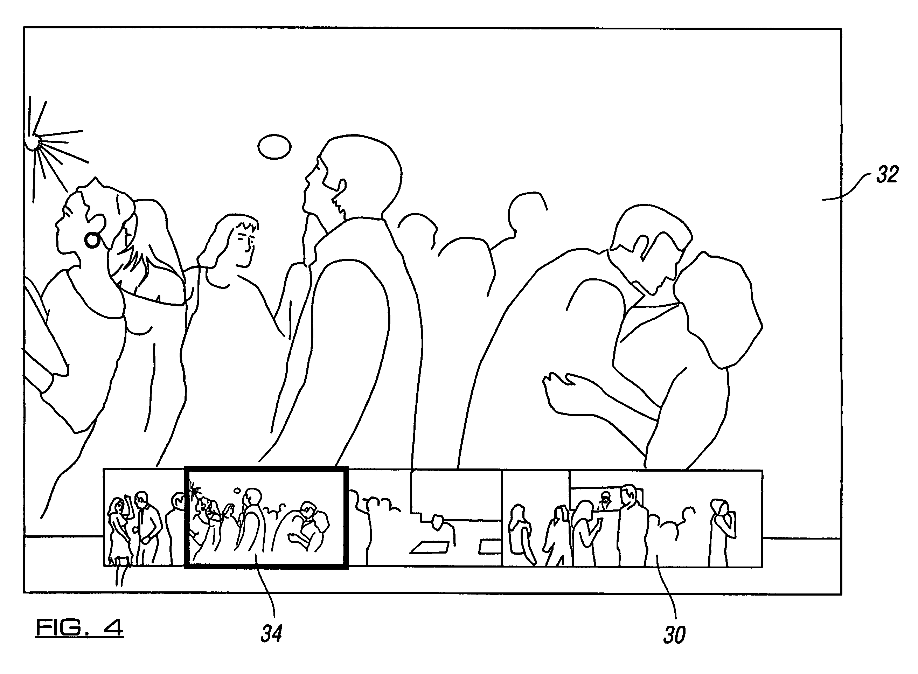

However as an alternative embodiment as shown in Figure 1B rather than the cameras being spaced around the video item, the cameras 8-15 are provided in a cluster pointing towards angled mirrors (not shown) which in turn allow each camera to capture a video image which each represents part of the 360 degree angle surround. This arrangement will be described in more detail with reference to Figures 3 and 4.

Thus, during any performance each of the cameras generates video data representing their particular view and this data is stored and after any necessary editing, the video data for each view is stored on a video data track for subsequent collection of the tracks on a recording media, such as a DVD. The video data tracks therefore represent the video item of the concert for the recording media on sale.

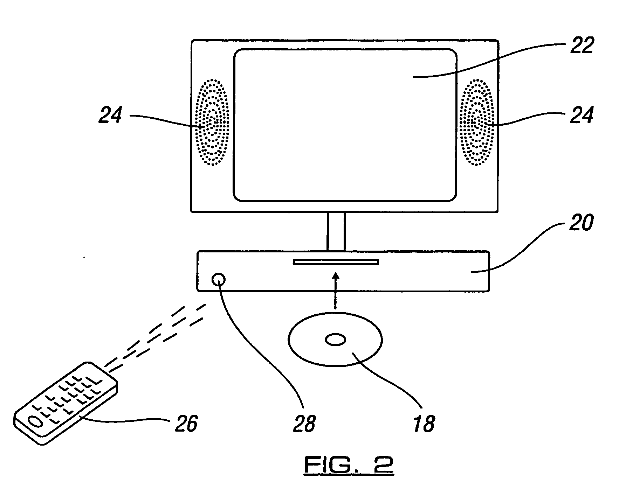

When purchased, the recording media, hereinafter referred to in a non-limiting manner as a DVD is inserted into apparatus as illustrated in Figure 2. The DVD 18 is inserted into a suitable apparatus, in this case a DVD player 20 which includes a decoder. The DVD player is provided with, or connected to, a display screen 22 for display of the video and speakers 24 for generation of the audio. Once inserted the subsequent operation of the DVD player can be controlled via keys on the housing of the player 20 but more typically by keys on a remote control 26 which operates in a conventional manner emitting an infra red signal received by the receiver 28 on the DVD player.

When inserted and the selection to play the DVD is made, a default video data track on the DVD is used, perhaps that representing the forward view from camera 8. At the same time a selection display is generated along the bottom of the screen representing all of the available views.

In the embodiment shown in Figures 3 and 4, a camera rig as illustrated in Figure 1B, with 8 DV-Cam video cameras mounted on their end and pointing up (to allow the lenses to be very close to each other) at angled mirrors is used. This allows the capturing of video 360 degrees around the location of the rig, i.e. the cameras are grouped in a cluster and, via the angled mirrors, obtain video images pointing outwardly around 360 degrees. This is the opposite to the arrangement shown in Figure 1A. The 8 resulting video streams each represent a portion of the 360 degrees panorama and have some overlap, but represent the full panorama. Still frames from each of the angles are obtained and stitched together into panoramic frames.

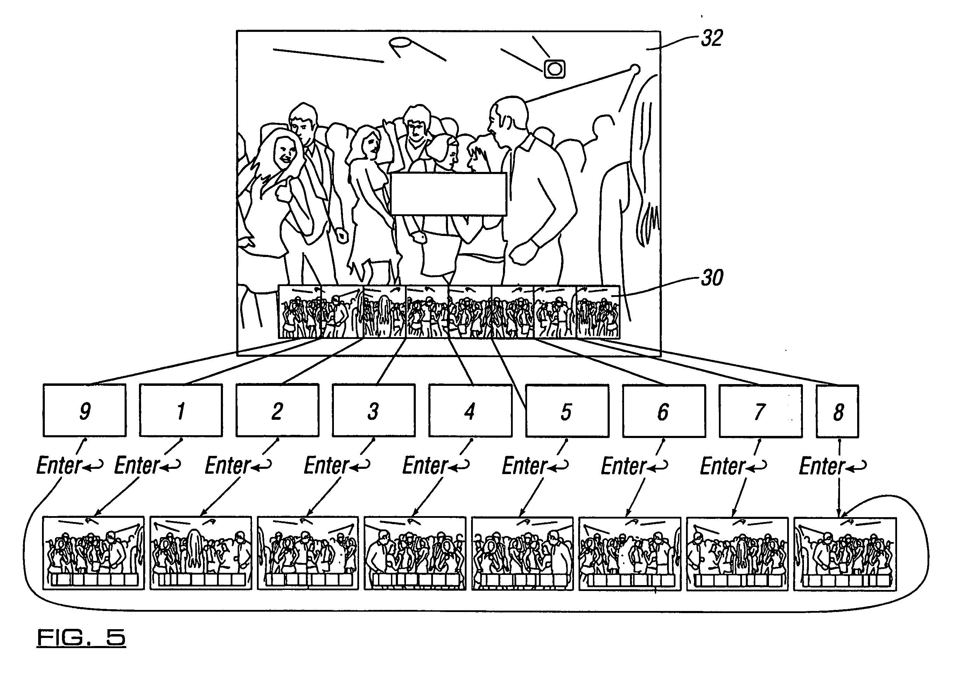

The panoramic frames are then used to create video again so as to create a panoramic video stream for the generation of the selection display by mapping the same onto each of the video data tracks for the available views. The eight data streams for respective views are then able to provide a multi-angle video selection of the video item which can be navigated and selected via the selection display 30 and the viewers remote control. One process for achieving this is given in more detail with reference to Figures 5-7.

The display generated is illustrated with respect to Figures 3 and 4 which show a crowd scene taken from a number of views to generate a panoramic view, said views represented by the selection display 30 at the bottom of the main display screen 32. It will be seen that in each case the segment of the selection display which is highlighted 34 at that time represents the selected view, and it is the date for that view which is generated across the entire screen.

In this example the viewer navigates the 360 degrees of video by way of miniature video version of the entire panoramic selection display 30 that is at the bottom of the screen as the selection display. They choose the view that they want by way of a highlight overlay 34 that they can move from left to right and back across the selection display. When they get to the view of the panoramic that they want to see, the user presses "enter" on their remote control and that portion of the panorama comes up on screen. They continue in this way, moving the highlight curser 34 over the selection display and selecting and viewing any portion of the video panorama. It is preferred that the display generated is of a seamless letterbox form as shown, and indeed this selection display can be utilised for other video processing systems.

With the selection display shown in Figures 3 and 4 it is the Figure 1b arrangement which is represented. For the Figure 1a version where the cameras face inward, the positioning of items in each camera video image would be different picture to picture, as the different cameras show a different view of the same thing. In this arrangement the display can be generated in other formats, such as a series of picture "boxes", each representing one of the views.

Turning now to Figures 5-7 there is illustrated one method and process by which the video images from each of the cameras can be collated and processed to form the selection display and then the selection display 30 superimposed on the video frames used for generating the full screen display 32 following user selection.

With reference to Figure 5, each of the numbered boxes 1-7 represents a video segment and, on screen the segments are overlapped to form the selection display 30 as shown. The viewer can navigate between the segments by pressing the left and right arrow keys, (or up and down keys if required) on their remote control to suit the orientation of the selection display. Each of the segments is in turn associated with a particular angle of view of the event and the selection of that segment by the viewer causes the DVD player to switch to the video data stream which represents the particular selected angle of video associated with the segment.

The command is typically executed when the viewer presses the Enter, OK, or another designated key on the remote control device. Alternatively, if for example the DVD is being played on a computer the Viewer can click on a button via the mouse to execute the command and the segment selected at that time is used to associate to the appropriate video data track for the generation of the full screen display from the selected viewing angle. With regard to the segments 9 and 1, segment 9 overlaps the segment 1 and when selected actually activates the video display for the viewing angle given by segment 8.

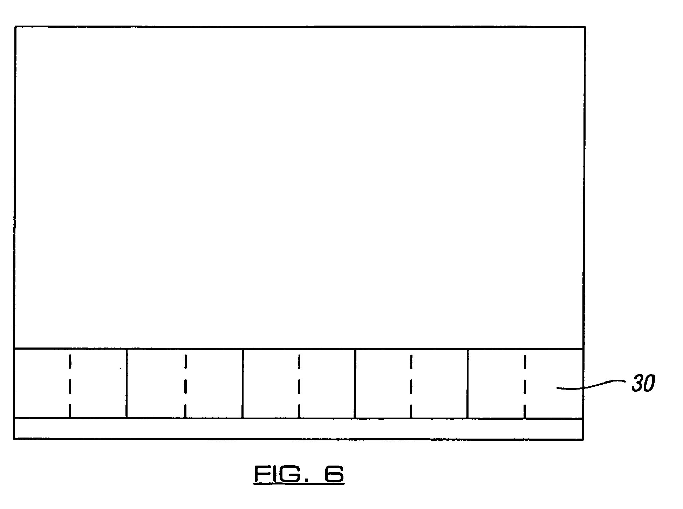

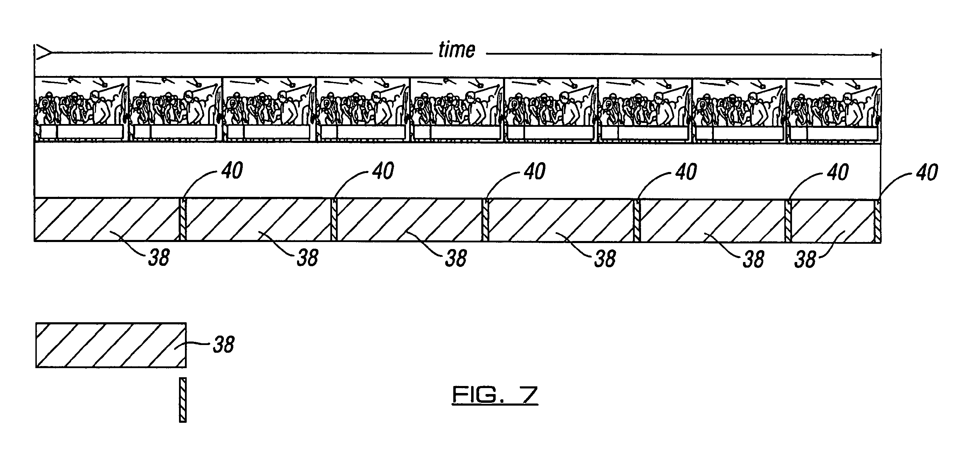

Upon selection of a particular video display, the selection display is generated to show the current content of all of the available video angles represented by the segments. The actual angle which is being displayed on the full screen is illustrated by the highlighting 34 of one segment, with the highlighted area moveable in response to the viewers key selections. Figure 6 illustrates how an overview can be generated which groups the segments into two groups, an odd numbered group in which the blue (full lines for purposes of illustration) are ignored, and a second even numbered group of segments where the red (broken lines for purposes of illustration) are ignored. Figure 7 illustrates how, with the picture track overlay, the same can be populated with video with respect to time. In this case the track comprises a series of subpictures 38 which include segments and these are interspersed with subpictures 40 without segments, amounting, in total to 12 frames or subpictures in duration.

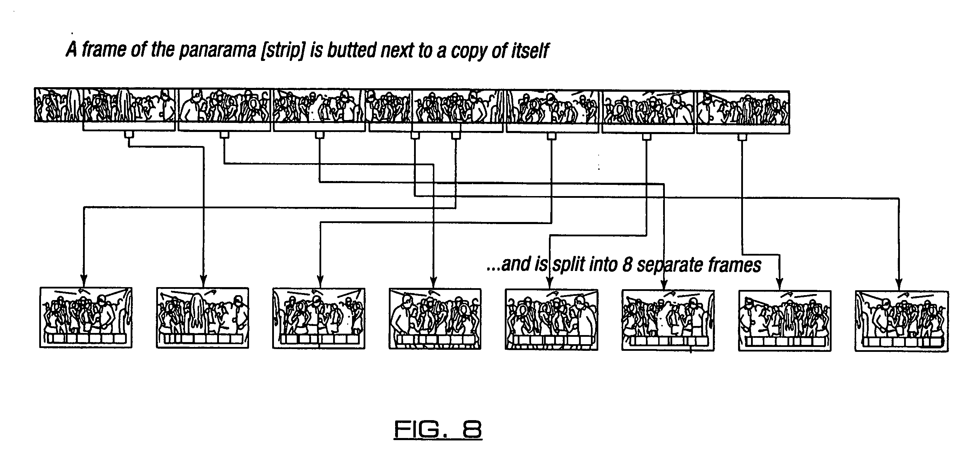

Figure 8 illustrates how for each frame, with the selection display generated as herein described the same is superimposed. Each data group represents a particular camera viewing angle and so for each of the eight groups, the frames in the groups have the selection display imposed thereon. The groups are collected and transcoded into an MPEG2 compliant stream and brought into a DVD video authoring programme. Thus when the frames for a particular group and hence video stream are selected, the selection display is viewable.

When a view is selected from the selection display the select signal is transmitted and the DVD player identifies the appropriate video data track on the DVD for that view and generates the video display across the screen thus showing to the viewer the required view of the event.

## Claims

1. A system for recording, storing and playing digital data, such system including means for generating the video data (8-15) a recording media (18), a device (20) for decoding the recording media to retrieve data on the recording media and generating a video display on a screen (22) connected thereto, said recording media including stored therein video digital data for a defined video item (2), and when a viewer selects to use said recording media, at least two viewpoints of said video item are available to be selected by the viewer, to be shown on the main video display screen (24) said viewpoints defined by a plurality of video data tracks on the recording media, said plurality of video data tracks including video data for the same video item, each of said tracks comprising a view of the video item taken by cameras at locations at a different angle and/or height with respect to the video item and the video data tracks include data representing views from locations spaced in a pattern to provide viewpoints of the video item from differing angles and a seamless selection display (30) is generated on the screen including each of the video track views which are available for selection to view, the said views are placed adjacent each other to form the selection display (30) to provide an integrated panoramic view of the several video track views to provide a virtual viewpoint (34) which can be selected by the viewer via a highlighted portion or cursor selectively movable along the display (30), said selection display including the video track view being shown on the main video display screen at that time and **characterised in that** the video data for the generation of the selection display is mapped onto each of the video data tracks so that when a particular video track view is selected for display on the main video display screen the related video data track for that view includes the data to allow the selection display (30) to be displayed.

2. A system according to claim 1 **characterised in that** the viewer is provided with a selection means to allow the selection of one of said video tracks to be viewed on the screen.

3. A system according to claim 1 **characterised in that** the video item is an event which has been filmed and the data recorded onto and stored on the recording media.

4. A system according to claim 1 **characterised in that** one of the video tracks is defined as a default video track which upon selection of the video item is decoded by default and a video display generated on screen from the data on said default video track.

5. A system according to claim 4 **characterised in that** the default video track is formed from the data of the video item recorded from a predefined angle or viewing height of the video item.

6. A system according to claim 5 **characterised in that** the view which is generated is from a location which provides a front view of the video item.

7. A system according to claim 1 **characterised in that** the viewer can navigate along the said selection display using selection means which interact with the apparatus for decoding and generating the video display.

8. A system according to claim 7 **characterised in that** the user can select one of the video item views by generating a selection signal when the cursor or highlighted portion on the selection display is at the appropriate location.

9. A system according to claim 8 **characterised in that** the selection signal is generated via a selection means in the form of a remote control device.

10. A system according to claim 1 **characterised in that** eight camera locations are positioned 45 degrees apart.

11. A system according to claim 10 **characterised in that** at each location there is provided a video camera directed at the video item.

12. A System according to claim 1 **characterised in that** a processing system is provided to process data in response to a user selection of any one of a number of video data tracks on a recording medium, said user using control means to generate video data streams to be selected by the user and generate on the screen.

13. A system according to claim 1 wherein the cameras are located to face inwardly towards the video item.

14. A system according to claim 1 wherein the cameras are located to obtain video images of the video item outwardly of and surrounding the cameras.

15. A method for generating a series of views of a video item (2), said method comprising the steps of capturing and generating video data for at least two different views of the video item, allocating the video data for each view onto a video data track of a recording media (18), said recording media, when inserted into decoding apparatus (20), allowing the generation of video from user selected available video tracks on the main display screen (30) and the user is provided with selection means (26) to select to view the video item by selecting one of the views to allow the generation of video from the video data track matching the selected view on a screen (22) connected to the decoding apparatus and the views are from locations spaced to provide views of 360° with respect to the video item and the selection is made via a seamless selection display (30) generated on the display screen indicating each of the video track views which are available for selection to view, the video track views are placed adjacent each other to form the display as an integrated panoramic view comprising each_of the several video track views including that view which is being shown on the main display screen to allow the viewer to select a virtual viewpoint (34) which can be selected by the viewer via a cursor or highlighted portion selectively movable by the viewer along said display (30) and **characterised in that** the video data for the generation of the selection display (30) is mapped onto each of the video data tracks so that when a particular video track view is selected for display on the main video display screen the related video data track for that view includes the data to allow the selection display (30) to be displayed in conjunction with the selected video track view.

## Patentansprüche

1. Ein System zur Aufzeichnung, Speicherung und Abspielen von Digitaldaten, wobei solch ein System Mittel zur Erzeugung der Videodaten (8 - 15), ein Aufzeichnungsmedium (18), ein Gerät (29) zur Entschlüsselung des Aufzeichnungsmediums, um Daten auf dem Aufzeichnungsmedium wieder zu finden und eine Videoanzeige auf einem daran angeschlossenen Bildschirm (22) zu erzeugen, aufweist, wobei besagtes Aufzeichnungsmedium digitale Videodaten darin für ein bestimmtes Videoobjekt (2) aufweist und wenn ein Zuschauer selektiert, besagtes Aufzeich-nungsmedium zu nutzen, können wenigstens zwei Ansichten des besagten Video-objekts vom Zuschauer selektiert werden, die im Hauptvideo-Bildschirm (24) gezeigt werden und besagte Ansichten durch eine Mehrzahl von Videodaten-Track auf dem Aufzeichnungsmedium bestimmt werden, besagte Mehrzahl von Videodaten-Tracks der Videodaten für dasselbe Videoobjekt aufweisen, wobei jeder der Tracks eine Ansicht des Videoobjekts enthält, die von Kameras am Ort von unterschiedlichen Perspektiven und/oder Höhe in Bezug auf das Videoobjekt aufgenommen wurden und die Videodaten-Tracks Daten enthalten, die Ansichten von nach einem Schema angeordneten Positionen darstellen, um Ansichten des Videoobjekt von unter-schiedlichen Perspektiven verfügbar zu machen und eine nahtlose Auswahlanzeige (30) auf dem Bildschirm erzeugt wird, inklusive jede der Video-Track-Ansichten, die zum Sehen selektiert werden können, die besagten Ansichten neben einander ange-ordnet werden, um die Auswahlanzeige (30) zu bilden, so dass eine integrierte Panoramaansicht mehrerer Video-Track-Ansichten verfügbar gemacht wird, um eine virtuelle Ansicht (34) bereitzustellen, die vom Zuschauer mit Hilfe des selektiv ent-lang der Anzeige (39) beweglichen hervorgehobenen Teils oder Cursor selektiert werden kann, und besagte Auswahlanzeige inklusive der im Hauptvideo-Bildschirm zu der Zeit angezeigten Video-Track-Anzeige **dadurch gekennzeichnet, dass** die Videodaten zur Erzeugung der Auswahlanzeige auf jedem der Videodaten-Tracks aufgezeichnet wird, so dass wenn eine bestimmte Video-Track-Ansicht zur Anzeige im Hauptvideo-Bildschirm selektiert wird, der damit verbundene Videodaten-Track für diese Ansicht die Daten aufweist, der die Anzeige der Auswahlanzeige (30) ermöglicht.

2. Ein System nach Anspruch 1, **dadurch gekennzeichnet, dass** dem Zuschauer ein Auswahlmittel verfügbar gemacht wird, um die Wahl einer der besagten Video-Tracks im Bildschirm zu sehen.

3. Ein System nach Anspruch 1, **dadurch gekennzeichnet, dass** das Videoobjekt ein Event ist, dass gefilmt wurde und die Daten auf dem Aufzeichnungsmedium aufgezeichnet und gespeichert wurden.

4. Ein System nach Anspruch 1, **dadurch gekennzeichnet, dass** einer der Video-Tracks als ein Standardvideo-Track definiert ist, der nach der Auswahl des Videoobjekts standardmäßig entschlüsselt wird und eine Videoanzeige im Bildschirm aus den Daten auf dem besagten Standardvideo-Track erzeugt wird.

5. Ein System nach Anspruch 4, **dadurch gekennzeichnet, dass** der Standardvi-deo-Track aus den Daten des gespeicherten Videoobjekts gebildet wird, der aus einer vorbestimmten Perspektive oder Sehhöhe des Videoobjekt aufgezeichnet wurde.

6. Ein System nach Anspruch 5, **dadurch gekennzeichnet, dass** die Ansicht von einer Position erzeugt wird, die eine Vorderansicht des Videoobjekts verfügbar macht.

7. Ein System nach Anspruch 1, **dadurch gekennzeichnet, dass** der Zuschauer an der besagten Auswahlanzeige mit dem Wahlmittel entlang navigieren kann, das mit dem Apparat zur Entschlüsselung und Erzeugung der Videoanzeige interagiert.

8. Ein System nach Anspruch 7, **dadurch gekennzeichnet, dass** der Zuschauer eines der Videoobjekte selektieren kann, indem ein Auswahlsignal generiert wird, wenn der Cursor oder das hervorgehobene Teil auf der Auswahlanzeige sich an der entsprechenden Stelle befindet.

9. Ein System nach Anspruch 8, **dadurch gekennzeichnet, dass** das Auswahlsignal über ein Wahlmittel in der Form einer Fernbedienung erzeugt wird.

10. Ein System nach Anspruch 1, **dadurch gekennzeichnet, dass** acht Kamerapositionen 45 ° entfernt voneinander angeordnet sind.

11. Ein System nach Anspruch 10, **dadurch gekennzeichnet, dass** an jedem Ort eine auf das Videoobjekt gerichtete Kamera verfügbar gemacht ist.

12. Ein System nach Anspruch 1, **dadurch gekennzeichnet, dass** ein Verarbeitungsystem als Reaktion auf eine Auswahl durch den Anwender eines beliebigen aus einer Anzahl von Videdodaten-Tracks auf einem Aufzeichnungsmedium verfügbar gemacht wird, besagter Anwender Steuerungsmittel verwendet, um Videodaten-Streams zu erzeugen, die vom Anwender selektiert und im Bildschirm erzeugt werden.

13. Ein System nach Anspruch 1, in dem die Kameras angeordnet sind, dass sie nach innen auf das Videoobjekt gerichtet sind.

14. Ein System nach Anspruch 1, in dem die Kameras angeordnet sind, Video-bilder des Videoobjekts außerhalb der Kameras und um die Kameras herum zu erhalten.

15. Eine Methode zur Erzeugung einer Reihe von Ansichten eines Videoobjektes (2), wobei besagte Methode Schritte zur Erfassung und Erzeugung von Videodaten für wenigstens zwei verschiedene Ansichten des Videoobjektes aufweist, die Video-daten für jede Ansicht auf einen Videodaten-Track eines Aufzeichnungsmediums (18) zugeordnet werden, besagtes Aufzeichnungsmedium, wenn in einen Entschlüsselungsapparat (20) eingeführt, die Erzeugung von Videos aus, vom Anwender verfügbaren Video-Tracks auf dem Hauptbildschirm (30) ermöglicht und dem Anwender ein Auswahlmittel (26) verfügbar gemacht wird, um das Videoobjekt zu selektieren, indem eine der Ansichten selektiert wird, um Erzeugung eines Videos aus dem Videodaten-Track zu ermöglichen, der mit der selektierten Ansicht im Bildschirm (22), der an einen Entschlüsselungsapparat angeschlossen ist, übereinstimmt und die Ansichten aus Positionen stammen, die angeordnet sind, 360 ° Ansichten in Bezug auf das Videoobjekt verfügbar zu machen und die Wahl nahtlos mit einer Auswahlanzeige (30) auf dem Bildschirm erzeugt, getroffen wird, die jede der zur Wahl verfügbaren Video-Track-Ansichten anzeigt, die Video-Track-Ansichten neben einander angeordnet werden, um die Anzeige als eine integrierte Panoramaansicht zu bilden, die jeden der mehreren Video-Tracks enthält, inklusive der Ansicht, die im Hauptbildschirm gezeigt wird, um dem Zuschauer zu ermöglichen, eine virtuelle Ansicht (34) über einen Cursor oder ein hervorgehobenes Teil zu wählen, der selek-tiv vom Zuschauer entlang der besagten Anzeige (30) beweglich ist, **dadurch gekennzeichnet, dass** die Videodaten zur Erzeugung der Wahlanzeige (30) auf jeden der Videodaten-Tracks aufgezeichnet wird, so dass wenn eine bestimmte Video-Track-Ansicht zur Anzeige im Hauptvideo-Bildschirm selektiert wird, der damit verbundene Videodaten-Track für diese Ansicht die Daten enthält, so dass die Aus-wahlanzeige (30) zusammen mit der selektierten Video-Track-Ansicht angezeigt werden kann.

## Revendications

1. Système d'enregistrement, de stockage et de lecture de données numériques, un tel système comprenant des moyens de génération des données vidéo (8-15), un support d'enregistrement (18), un dispositif (20) pour décoder le support d'enregistrement afin de récupérer les données présentes sur le support d'enregistrement et générer un affichage vidéo sur un écran (22) connecté au dispositif, ledit support d'enregistrement contenant des données numériques vidéo stockées relatives à une scène vidéo (2) définie et, quand le spectateur choisit d'utiliser ledit support d'enregistrement, au moins deux points de vue de ladite scène vidéo sont disponibles pour la sélection par le spectateur pour l'affichage sur l'écran vidéo principal (24), lesdits points de vue étant définis sur le support d'enregistrement par une pluralité de pistes de données vidéo, ladite pluralité de pistes de données vidéo comprenant des données vidéo pour la même scène vidéo, chacune desdites pistes comprenant une vue de la scène vidéo tournée par des caméras dans des emplacements dont la hauteur et/ou l'angle diffèrent relativement à la scène vidéo, et les pistes de données vidéo comprennent des données qui représentent des vues prises depuis des emplacements espacés en une configuration qui produit des points de vue de la scène vidéo à partir d'angles différents, et un affichage de sélections transparent (30) est généré sur l'écran, avec toutes les vues sur pistes vidéo qui peuvent être sélectionnées pour le visionnement, lesdites vues étant placées adjacentes les unes aux autres pour former l'affichage de sélections 30, pour fournir une vue panoramique intégrée des diverses vues sur pistes vidéo pour produire un point de vue virtuel (34) que le spectateur peut sélectionner au moyen d'un segment de mise en évidence ou d'un curseur qui peut être déplacé sélectivement le long de l'affichage (30), ledit affichage de sélections incluant la vue de piste vidéo qui est en cours d'affichage sur l'écran de visualisation principal, et **caractérisé en ce que** les données vidéo pour la génération de l'affichage de sélections sont mappées sur chacune des pistes de données vidéo de sorte que, lorsqu'une vue sur piste vidéo particulière est sélectionnée pour l'affichage sur l'écran vidéo principal, la piste de données vidéo associée à cette vue inclut les données qui permettent de visualiser l'affichage de sélections (30).

2. Système selon la revendication 1, **caractérisé en ce que** le spectateur est pourvu de moyens de sélection qui lui permettent de choisir l'une desdites pistes vidéo pour le visionnement sur l'écran.

3. Système selon la revendication 1, **caractérisé en ce que** la scène vidéo est un événement qui a été filmé, les données étant enregistrées et stockées sur le support d'enregistrement.

4. Système selon la revendication 1, **caractérisé en ce que** l'une des pistes vidéo est définie comme une piste vidéo implicite qui, lorsque la scène vidéo est sélectionnée, est décodée implicitement, un affichage vidéo étant généré sur l'écran à partir des données présentes sur ladite piste vidéo implicite.

5. Système selon la revendication 4, **caractérisé en ce que** la piste vidéo implicite est formée à partir des données de la scène vidéo enregistrées depuis un angle ou une hauteur de visionnement donnée de la scène vidéo.

6. Système selon la revendication 5, **caractérisé en ce que** la vue générée provient d'un emplacement qui donne une vue de l'avant de la scène vidéo.

7. Système selon la revendication 1, **caractérisé en ce que** le spectateur peut naviguer le long dudit affichage de sélections en utilisant des moyens de sélection qui interagissent avec l'appareil pour décoder et générer l'affichage vidéo.

8. Système selon la revendication 7, **caractérisé en ce que** le spectateur peut choisir l'une des vues de la scène vidéo en générant un signal de sélection lorsque le curseur ou le segment de mise en évidence de l'affichage de sélections se trouve au point approprié.

9. Système selon la revendication 8, **caractérisé en ce que** le signal de sélection est généré par le biais de moyens de sélection qui prennent la forme d'un dispositif de télécommande.

10. Système selon la revendication 1, **caractérisé en ce que** huit emplacements de caméras sont disposés à 45 degrés les unes des autres.

11. Système selon la revendication 10, **caractérisé en ce qu'**une caméra vidéo dirigée vers la scène vidéo est prévue à chaque emplacement.

12. Système selon la revendication 1, **caractérisé en ce qu'**un système de traitement est prévu pour traiter les données en réponse à la sélection, par un utilisateur, de l'une quelconque de plusieurs pistes de données vidéo sur un support d'enregistrement, ledit utilisateur employant le moyen de commande pour générer des suites de données vidéo à sélectionner par le spectateur et à générer sur l'écran.

13. Système selon la revendication 1, dans lequel les caméras sont placées de sorte à faire face vers l'intérieur, et donc vers la scène vidéo.

14. Système selon la revendication 1, dans lequel les caméras sont placées de sorte à produire des images vidéo de la scène vidéo qui est à l'extérieur et entoure les caméras.

15. Procédé de génération d'une série de vues d'une scène vidéo (2), ledit procédé comprenant les étapes qui consistent à saisir et à générer des données vidéo pour au moins deux vues différentes de la scène vidéo, à affecter les données vidéo pour chaque vue à une piste de données vidéo d'un support d'enregistrement (18) qui, après son introduction dans un lecteur avec décodeur (20), rend possible la génération de la vidéo à partir de pistes vidéo disponibles sur l'écran de visualisation principal (30) et le spectateur dispose de moyens de sélection (26) pour choisir de visionner la scène vidéo données vidéo en sélectionnant l'une des vues permettant de faire générer la vidéo à partir de la piste de données vidéo qui correspond à la vue sélectionnée sur un écran (22) connecté au décodeur, et les vues proviennent d'emplacement espacés de sorte à fournir des vues sur 360" relativement à la scène vidéo, et la sélection s'effectue par le biais d'un affichage de sélections transparent (30) généré sur l'écran de visualisation et qui indique chacune des vues sur piste vidéo disponibles pour la sélection du visionnement, les vues des pistes vidéo étant placées adjacentes les unes aux autres pour former l'affichage sous forme d'une vue panoramique intégrée qui comprend chacune des diverses vues présentes sur les pistes vidéo, y compris la vue en cours d'affichage sur l'écran de visualisation principal afin de permettre à le spectateur de sélectionner un point de vue virtuel (34) au moyen d'un curseur ou d'un segment de mise en évidence que le spectateur peut déplacer le long dudit affichage (30), et **caractérisé en ce que** les données vidéo destinées à la génération de l'affichage de sélections (30) sont mappées sur chacune des pistes de données vidéo de sorte que, quand une vue sur piste vidéo particulière est sélectionnée pour l'affichage sur l'écran de visualisation principal, la piste de données vidéo associée à cette vue inclut les données qui rendent possible l'affichage de sélections (30) en même temps que la vue sur piste vidéo sélectionnée.
